Europäisches Patentamt

European Patent Office

Office européen des brevets

(11) Publication number: **0 371 596 B1**

## EUROPEAN PATENT SPECIFICATION

(45) Date of publication of patent specification: **13.04.94** (51) Int. Cl.⁵: **G06K 9/22**

(21) Application number: **89310329.1**

(22) Date of filing: **10.10.89**

(54) **Character reader.**

(30) Priority: **29.11.88 JP 301531/88**

(43) Date of publication of application:
**06.06.90 Bulletin 90/23**

(45) Publication of the grant of the patent:
**13.04.94 Bulletin 94/15**

(84) Designated Contracting States:
**DE FR GB IT SE**

(56) References cited:
**EP-A- 0 153 795**
**EP-A- 0 177 319**

**PATENT ABSTRACTS OF JAPAN, vol. 6, no.
171 (P-140)(1049) 4 September 1982;& JP-
A-57 089 179**

(73) Proprietor: **KABUSHIKI KAISHA TOSHIBA
72, Horikawa-Cho
Saiwai-ku
Kawasaki-shi Kanagawa-ken(JP)**

(72) Inventor: **Yamamoto, Takaharu Nagoya Works
Kabushiki Kaisha Toshiba
21 Yoshihara-cho 4-chome
Nishi-ku Nagoya(JP)**

(74) Representative: **Freed, Arthur Woolf et al
MARKS & CLERK
57-60 Lincoln's Inn Fields
London WC2A 3LS (GB)**

# EP 0 371 596 B1

**Description**

The present invention relates to a character reader provided with a digitizer having a tablet on which characters are manually written with a writing means, thereby recognizing the characters.

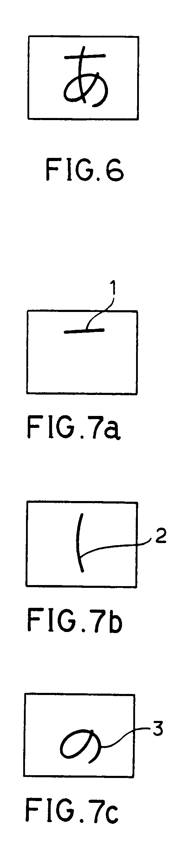

Character readers of the type described above have been known. FIGS. 6 and 7a-7c illustrate a case where a Japanese character

"あ"

is manually written with a stylus pen on the tablet of the character reader. In inputting

"あ",

an initial stroke corresponding to a movement locus 1 of the stylus pen is first written on the tablet, as shown in FIG. 7a. Subsequently, second and third strokes corresponding to respective movement loci 2 and 3 are written on the tablet in sequence, as shown in FIGS. 7b and 7c, thereby completing input of the character

"あ".

It is known in the art that non-contact periods of the stylus pen between the movement loci 1 and 2 and the movement loci 2 and 3 are shorter than the non-contact period between the time when the last stroke corresponding to movement locus 3 is written on the tablet and the time when an initial stroke of a subsequent character to be inputted is started. Accordingly, in determining whether or not the input of a character has been completed, the non-contact periods of the stylus pen are compared with a predetermined identification period. For example, one of such conventional character readers, described in EP-A-0 177 319, comprises a digitizer adapted to output data of position of a stylus pen in contact with a tablet when characters are inputted with the stylus pen on the tablet, and means for counting a period during which the stylus pen is not in contact with the tablet, thereby determining that input of one character has been completed when the non-contact period is longer than a predetermined identification period. In this construction, the predetermined identification period is set so as to be longer than the non-contact period between the initial movement locus 1 and the second movement locus 2 and that between the second movement locus 2 and the third movement locus 3. The identification period is further set so as to be shorter than the non-contact period between the third movement locus 3 and the initial movement locus of the character to be inputted next. When it is determined that input of one character has been completed, the movement loci 1, 2 and 3 of the stylus pen are obtained based on the position data from the digitizer. Then, a process is executed for recognizing the character manually written on the tablet based on the movement loci 1, 2 and 3.

However, the predetermined identification period is fixed in the above-described conventional construction. Accordingly, for example, in the case of a person who usually writes characters slowly, the non-contact period between the first and second movement loci 1 and 2 is occasionally rendered longer than the identification period and it is determined that input of one character has been completed when part of the character corresponding to the first movement locus of the stylus pen is inputted. Consequently, the character,

"あ"

cannot be recognized. While, when the identification period is set to be long on account of the person who writes characters slowly, a person who usually writes characters fast needs to wait for elapse of the identification period for input of the next character after completion of input of one character. Thus, the standby period is increased for the person who writes fast, which incurs a problem of reducing the usability of the character reader.

Therefore, an object of the present invention is to provide a character reader wherein error in character recognition can be prevented in the both cases of persons who write slowly and fast, thereby improving the

2

EP 0 371 596 B1

usability of the character reader.

The invention provides for a character reader comprising a digitizer provided with a tablet on which characters are manually written with a writing means for input of the characters, the digitizer outputting position data on a contact position of the writing means with the tablet when the character is written on the tablet, non-contact period counting means for counting a non-contact period during which the writing means is detached from the tablet, in response to the position data supplied thereto from the digitizer, comparing means for comparing the non-contact period obtained by the non-contact period counting means with an identification period, thereby generating a one character input completion signal when the non-contact period is longer than the predetermined identification period, character recognition means for obtaining movement loci based on the position data when supplied with the position data from the digitizer and with the one character input completion signal from the comparing means, thereby recognizing the character written on the tablet with the writing means, and identification period compensating means for compensating the identification period so that the identification period is lengthened or shortened as the non-contact period shorter than the identification period is lengthened or shortened respectively, after the writing means is detached from the tablet and then brought into contact with the tablet.

In the case of the person who writes slowly, the non-contact period between the movement locus corresponding to part of one stroke of one character and the subsequent movement locus is rendered longer. The predetermined identification period is compensated so as to comply with the lengthened non-contact period. Consequently, error of determination about character input completion can be prevented. Whereas, in the case of the person who writes fast, the non-contact period of the writing means between the movement loci is shortened. The predetermined identification period is compensated so as to comply with the shortened non-contact period. Consequently, the standby period between completion of one character input and the start of input of a subsequent character may be rendered short, thus improving the usability of the character reader.

The identification period compensating means may operate to obtain the mean of the non-contact periods of the writing means shorter than the identification period every time when the writing means is detached from the tablet to be again brought into contact with the tablet, thereby compensating the identification period based on the mean obtained.

The identification period is compensated every time when the writing means is detached from the tablet and then brought into contact with it or every time when the non-contact period is established. Consequently, the identification period can quickly meet variations of the non-contact period. Furthermore, since the identification period is compensated based on the mean of the non-contact periods of the writing means, the compensation of the identification period may be properly performed.

The invention will be described, merely by way of example, with reference to the accompanying drawings, in which:

FIG. 1 is a block diagram of a character reader of an embodiment in accordance with the present invention;

FIG. 2 is a perspective view of a tablet in the exploded state;

FIG. 3 is a longitudinal cross section of the tablet;

FIG. 4 illustrates an electrical arrangement of a digitizer employed in the character reader;

FIG. 5 is a flowchart explaining the operation of the character reader;

FIG. 6 shows one of Japanese characters to be inputted; and

FIGS. 7a-7c show respective strokes corresponding to movement loci of a writing means when the character in FIG. 6 is written on the tablet with the writing means.

An embodiment of the character reader in accordance with the invention will now be described with reference to the accompanying drawings.

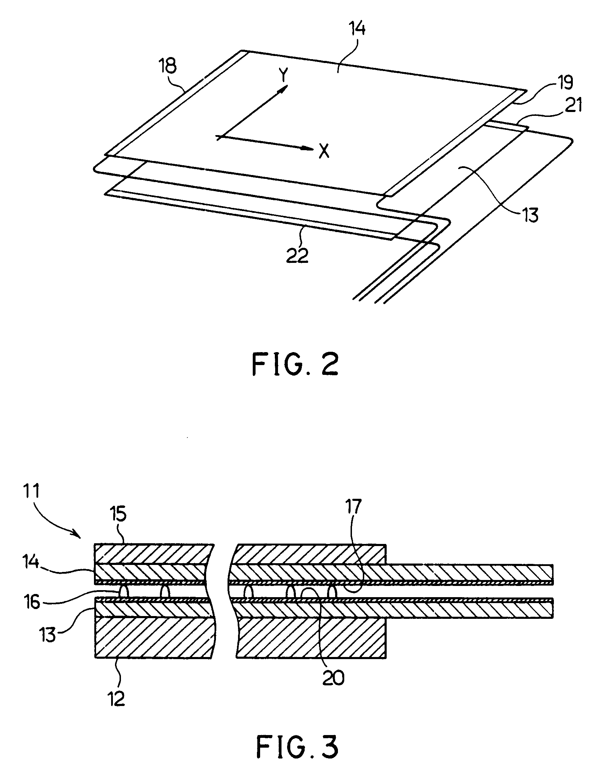

Referring first to FIGS. 2 and 3, a tablet 11 provided in a digitizer 23 of the character reader comprises a support panel 12, an ordinate sheet 13, an abscissa sheet 14 and an indication sheet 15. Ordinate and abscissa sheets 13 and 14 are spaced from each other by a spacer interposed therebetween. One of sides of abscissa sheet 14 opposed to ordinate sheet 13 is provided with a carbon resistive layer 17. Electrodes 18 and 19 of layer 17 are provided on both ends of abscissa sheet 14 in the direction of the abscissa, respectively. One of sides of ordinate sheet 13 opposed to abscissa sheet 14 is also provided with a carbon resistive layer 20. Electrodes 21 and 22 of layer 20 are provided on both ends of ordinate sheet 13 in the direction of the ordinate.

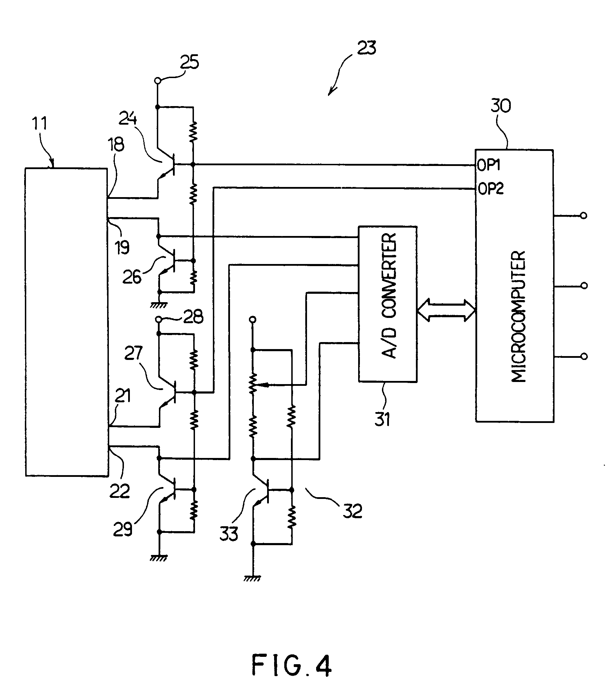

Digitizer 23 provided with the above-described tablet 11 will be described with reference to FIG. 4. The collector of a transistor 24 is connected to a DC power terminal 25 and the emitter thereof is connected to electrode 18 of tablet 11. The collector of a transistor 26 is connected to electrode 19 of tablet 11 and the emitter thereof is grounded. The collector of a transistor 27 is connected to a DC power terminal 28 and the

3

emitter thereof is connected to electrode 21 of tablet 11. The collector of a transistor 29 is connected to electrode 22 of tablet 11 and the emitter thereof is grounded. A microcomputer 30 serving as control circuit operates to supply transistors 24 and 26 with a high level signal from an output terminal OP1, thereby turning on transistors 24 and 26. Furthermore, a high level signal is supplied from an output terminal OP2 of microcomputer 30 to transistors 27 and 29, thereby turning on transistors 27 and 29. Reference numeral 31 designates an analog-to-digital (A/D) converter and numeral 32 a reference voltage generating circuit supplying A/D converter 31 with the reference voltage and provided with a transistor 33.

Digitizer 23 thus arranged is adapted to output position data on the contact position of stylus pen as a writing means on tablet 11 when a character is written on tablet 11 with the stylus pen. More specifically, first, microcomputer 30 operates to turn on both transistors 24 and 26 and turn off both transistors 27 and 29. Consequently, the DC voltage from the DC power source is applied across electrodes 18 and 19 of abscissa sheet 14, and no current is flowing through ordinate sheet 13. In this state, when the stylus pen is brought into contact with tablet 11 and pressed against it, carbon resistive layer 20 of ordinate sheet 13 is brought into contact with carbon resistive layer 17 of abscissa sheet 14 at point where the stylus pen is pressed. Consequently, both carbon resistive layers 17 and 20 electrically conduct. The voltage applied to the entire resistance of carbon resistive layer 17 of abscissa sheet 14 is divided at the conductive point and the divided voltage is outputted at terminals 21 and 22 of ordinate sheet 13. The abscissa (x-distance) of the position of the conductive point on the abscissa or the stylus pen contact position is found by the divided voltage and the potential gradient of the entire voltage applied to carbon resistive layer 17. Accordingly, microcomputer 30 is supplied with the divided voltage through A/D converter 31 and operates to obtain the abscissa of the stylus pen contact position. The resistance value of carbon resistive layer 20 of ordinate sheet 13 is set at a so small value as to be ignored with respect to an input impedance of A/D converter 31. Microcomputer 30 then operates to turn off transistors 24 and 26 and turn on transistors 27 and 29. Consequently, the voltage applied to the entire resistance of carbon resistive layer 20 of abscissa sheet 13 is divided at the conductive point and the divided voltage is outputted at terminals 18 and 19 of ordinate sheet 14. The ordinate (y-distance) of the position of the conductive point on ordinate or the stylus pen contact position is found by the divided voltage and the potential gradient of the entire voltage applied to carbon resistive layer 20. Accordingly, microcomputer 30 is then supplied with the divided voltage through A/D converter 31 and operates to obtain the ordinate of the stylus pen contact position. The above-described operations to find the abscissa and ordinate of the stylus pen contact position are repeatedly performed in a short cycle and digitizer 23 outputs data of the abscissa and ordinate of the stylus pen contact position as the position data on the stylus pen contact positions.

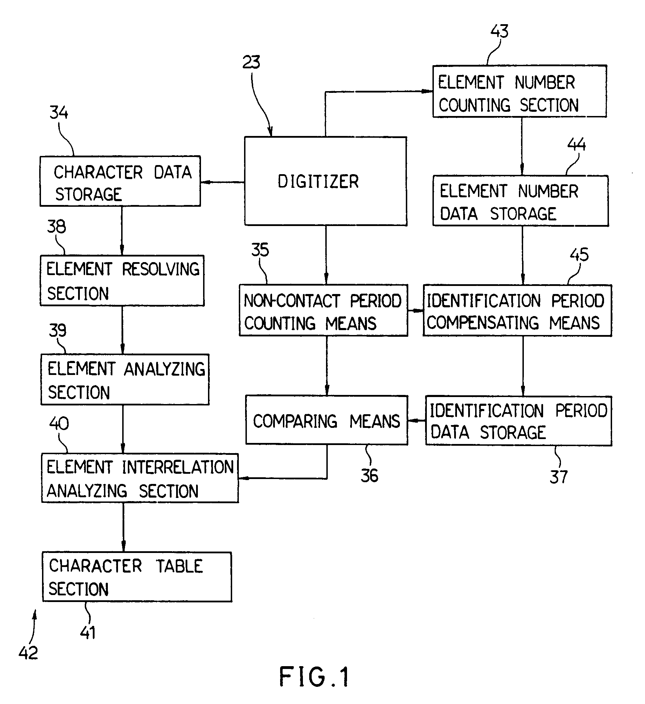

Referring now to FIG. 1, the position data on the stylus pen contact position is supplied from digitizer 23 from a character data storage 34 where data of characters inputted is stored at the unit of element. The word, "element" here refers to each of the movement loci 1, 2 and 3 corresponding to each portion of the character written by one stroke. Character data storage 34 stores data of position coordinate to indicate the locus of each element. More specifically, character data storage stores the position coordinate data (X11, Y11), (X12, Y12) and (X1n, Y1n) about a first element, the position coordinate data (X21, Y21), (X22, Y22) and (X2n, Y2n) about a second element, and the position coordinate (Xn1, Yn1), (Xn2, Yn2) and (Xnn, Ynn) about an n-th element. Non-contact period counting means 35 is supplied with the position data from digitizer 23 and counts the period during which the stylus pen is detached from tablet 11. Comparing means 36 compares the non-contact period obtained by non-contact period counting means 35 with an identification period, data of which is stored at an identification period storage 37. When the non-contact period is longer than the identification period, comparing means 36 generates a one character input completion signal. Element resolving section 38 is supplied with data of elements and operates to resolve each element into element constituents. For example, an element, "ㄱ" is resolved into element constituents "—" and "╱". Element analyzing section 39 is supplied with data of element and its element constituents from element resolving section 38 and operates to analyze each element constituent to determine which reference element constituent each element constituent corresponds to. Element analyzing section 39 further operates to analyze each element to determine the direction that the locus of each element is written. The reference element constituents include straight lines (upward, obliquely upward in the right, right, obliquely downward in the right, downward, obliquely downward in the left, left, and obliquely upward in the left), curved lines (clockwise, counterclockwise, and loop) and the like. Element interrelation analyzing section 40 is supplied with data of result of element analyzing and the one character input completion signal from comparing means 36 and operates to analyze interrelations of the elements. The element interrelation refers to the case, for example, where the distal end of one element comes in contact with another element, where the back end of one element comes in contact with another element, where two elements cross each other, or where one element does not come in contact with another element. A character table section 41 is provided with a dictionary wherein data of the number of elements, the kinds of elements and element interrelation with respect to each character corresponds to a character cord of each character. Character table section 41 is supplied with data of the number of elements, the kinds of elements and the element interrelation and operates to refer to the dictionary to thereby select and output the character cord of the character represented by the data inputted, thereby recognizing the character manually written on tablet 11. Character recognition means 42 is constituted by character data storage 34, element resolving section 38, element analyzing section 39, element interrelation analyzing section 40 and character table section 41. When supplied with the position data signal from digitizer 23 and the one character input completion signal from comparing means 36, character recognition means 42 operates to obtain the movement loci of the stylus pen on tablet 11 based on the position data supplied thereto, thereby recognizing the character written on tablet 11 based on the movement loci.

Element number counting section 43 is supplied with the position data from digitizer 23 and operates to count the number of elements of each character inputted. Data of the number of elements counted by element number counting section 43 is stored in an element number data storage 44.

Identification period compensating means 45 is supplied with data of the non-contact period from non-contact period counting means 35 and data of the number of elements from element number data storage 44 and operates to compensate the identification period in a manner as will be described later. Data of the identification period compensated by identification period compensating means 45 is stored in an identification period data storage 37. A microcomputer (not shown), a memory (not shown) and the like constitute character recognition means 42, element number counting section 43, element number data storage 44, identification period compensating means 45 and identification period data storage 37.

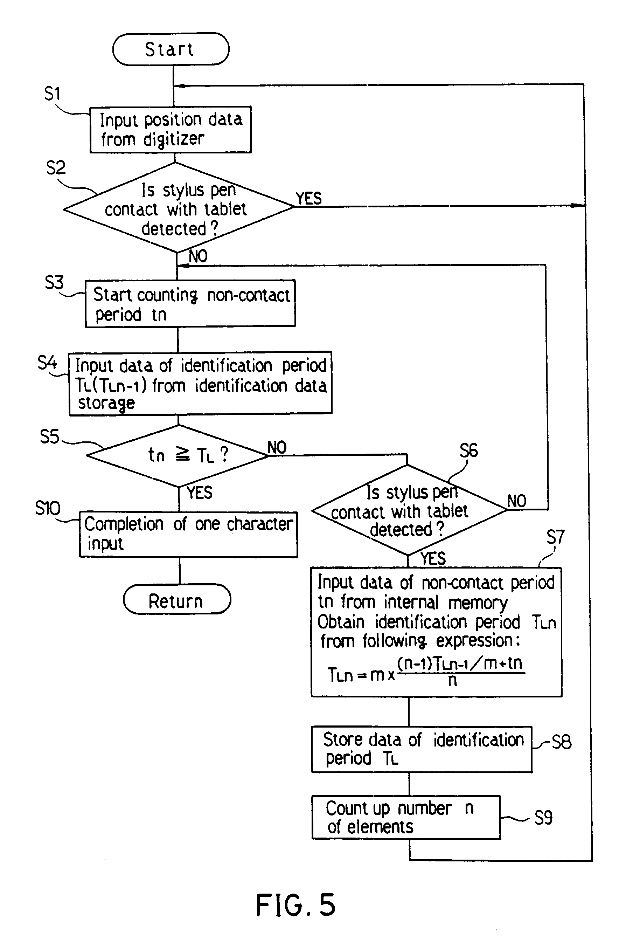

Operation of the character reader will be described with reference to FIGS. 5-7. FIG. 5 illustrates a part of contents of a control program stored in the microcomputer, the part relating to compensation of the identification period, or more specifically, functions of digitizer 23, non-contact period counting means 35, comparing means 36, element number counting section 43, element number data storage 44, identification period compensating means 45, identification period data storage 37 and the like. Non-contact period counting means 30 inputs the position data from digitizer 23 at step S1 to thereby determine whether or not the stylus pen is in contact with tablet 11 at step S2. In this respect, when input of the n-th element of those shown in FIGS. 7a-7c is completed, the stylus pen is detached from tablet 11 and accordingly, non-contact period counting means 35 starts counting the non-contact period $t_n$ at step S3. Then, comparing means 36 inputs data of the identification period $T_L$ from identification period data storage 37 at step S4. The identification period $T_L$ corresponds to the identification period $T_{Ln-1}$ obtained by compensating the predetermined identification period based on the non-contact period $t_{n-1}$ between the (n-1)th element and n-th element. Data of an initial value of the predetermined identification period is beforehand stored in identification period data storage 37 or the like.

Comparing means 36 compares the non-contact period $t_n$ with the identification period $T_L$ at step S5. Where $t_n < T_L$, it is determined whether or not the stylus pen is again brought into contact with tablet 11 at step S6. The above-described operation steps S3-S6 are repeated until the subsequent movement locus is started to be written. When the stylus pen is again brought into contact with tablet in the case of $t_n < T_L$ such that the subsequent movement locus is started to be written, the non-contact period $t_n$ is established and data thereof is stored in an internal memory not shown. Subsequently, the identification period $T_L$ iscompensated so as to be lengthened or shortened as the non-contact period $t_n$ which is shorter than the identification period $T_L$ is lengthened or shortened. More specifically, identification period compensating means 45 reads out data of non-contact periods $t_n$ and obtains the mean of the non-contact periods $t_n$. The microcomputer then obtains a new identification period $T_{Ln}$ based on the mean, for example, by doubling or trebling the mean at step S7. The new identification period $T_{Ln}$ is obtained by the following expression:

$$T_{Ln} = m \times \frac{(n-1)T_{Ln-1}/m + t_n}{n}$$

where

m = a constant, 2 or 3

n = number of elements

Subsequently, data of the identification period $T_{Ln}$ compensated as described above is stored as the identification period $T_L$ in the identification period data storage 37 at step S8 and element number counting means 43 counts up the number n of the elements at step S9. Operation is then returned to step S1, inputting the subsequent movement locus. The above-described processing is thereafter repeated.

Whereas, where $t_n \geq T_L$ at step S5 or where the non-contact period $t_n$ exceeds the identification period $T_L$, comparing means 36 determines that input of one character has been completed, at step S10. Then, character recognition means 42 operates to obtain the movement loci of the stylus pen based on the position data and recognize the character inputted based on the movement loci. Subsequently, the characters are repeatedly written on tablet 11 and repeatedly recognized as described above.

As obvious from the foregoing, the non-contact period $t_n$ refers to the period between the time when the stylus pen is detached from tablet 11 after the stylus pen is detached therefrom and again brought into contact therewith and the time when the stylus pen is again brought into contact with tablet 11. Identification period compensating means 45 compensates the identification period $T_L$ so that the period $T_L$ is lengthened or shortened as the non-contact period $t_n$ shorter than the identification period $T_L$ is lengthened or shortened. Consequently, although the stylus pen non-contact period $t_n$ between one element and the subsequent element in writing one character is lengthened in the case of persons who usually write slowly, the identification period $T_L$ is compensated so as to be lengthened in accordance with the lengthened non-contact period $t_n$ by identification period compensating means 45. Consequently, error in determining completion of one character input may be prevented as compared to the prior art character reader in which the identification period is fixed. In the case of persons who write fast, the non-contact period $t_n$ between one element and the subsequent element is shortened. However, the identification period $T_L$ may be compensated so as to be shortened in accordance with the shortened non-contact period $t_n$. As a result, the standby period between the time when one character input is completed and the time when the subsequent character is started to be written on tablet 11 may be shortened, thereby improving the usability of the character reader.

The identification period $T_L$ is compensated every time when the stylus pen is detached from tablet 11 and then brought into contact with tablet 11 again. Consequently, the identification period $T_L$ may be promptly compensated in accordance with variations of the non-contact period $t_n$, thereby further preventing error in determining completion of one character input. Furthermore, the microcomputer operates to obtain the mean of the non-contact periods $t_n$ shorter than the identification period $T_L$ out of those between the time when the stylus pen is detached from tablet 11 and the time when the stylus pen is again brought into contact with tablet 11. Since the identification period $T_L$ is compensated based on the mean thus obtained, the identification period $T_L$ may be accurately compensated.

The foregoing disclosure and drawings are merely illustrative of the principles of the present invention and are not to be interpreted in a limiting sense. The only limitation is to be determined from the scope of the appended claims.

## Claims

1. A character reader comprising a digitizer (23) provided with a tablet (11) on which characters are manually written with a writing means for input of the characters, the digitizer (23) outputting position data on a contact position of the writing means with the tablet (11) when the character is written on the tablet (11), non-contact period counting means (35) for counting a non-contact period during which the writing means is detached from the tablet (11), in response to the position data supplied thereto from the digitizer (23), comparing means (36) for comparing the non-contact period obtained by the non-contact period counting means (35) with an identification period, thereby generating a one character input completion signal when the non-contact period is longer than the identification period, and character recognition means (42) for obtaining movement loci based on the position data when supplied with the position data from the digitizer (23) and further with the one character input completion signal from the comparing means (36), thereby recognizing the character written on the tablet (11) with the writing means, characterized by identification period compensating means (45) for compensating the identification period so that the identification period is lengthened or shortened as the non-contact period shorter than the identification period among those between the time of detachment of the writing means from the tablet and the time of subsequent contact of the writing means therewith is lengthened or shortened respectively.

2. A character reader according to claim 1, wherein the identification period compensating means (45) operates to obtain the mean of the non-contact periods of the writing means shorter than the identification period every time when the writing means is detached from the tablet (11) to be again brought into contact with the tablet (11), thereby compensating the identification period based on the

EP 0 371 596 B1

mean obtained.

**Patentansprüche**

1. Zeichenlesevorrichtung mit einem Digitalisiergerät (23) mit einem Tablett (11), auf dem Schriftzeichen mit einer Schreibeinrichtung zur Eingabe der Schriftzeichen manuell geschrieben werden, wobei der Digitalisiergerät (23) Positionsdaten über eine Berührungsposition der Schreibeinrichtung mit dem Tablett (11) ausgibt, wenn das Schriftzeichen auf dem Tablett (11) geschrieben wird, einer Zähleinrichtung für berührungsfreie Perioden (35) zum Zählen einer berührungsfreien Periode, während der die Schreibeinrichtung vom Tablett (11) gelöst ist, wobei das Zählen unter Beachtung der Positionsdaten erfolgt, die vom Digitalisiergerät (23) dorthin übertragen werden, einer Vergleichseinrichtung (36) zum Vergleichen der berührungsfreien Periode, die von der Zähleinrichtung für berührungsfreie Perioden (35) ermittelt wurde, mit einer Identifikationsperiode, wodurch ein Zeicheneingabeende-Signal erzeugt wird, wenn die berührungsfreie Periode länger ist als die Identifikationsperiode, und einer Zeichenerkennungseinrichtung (42) zum Ermitteln von Bewegungsorten auf der Grundlage der Positionsdaten, wenn ihr die Positionsdaten vom Digitalisiergerät (23) und ferner das Zeicheneingabeende-Signal von der Vergleichseinrichtung (36) zugeführt werden, wodurch das Schriftzeichen, das mit der Schreibeinrichtung auf dem Tablett (11) geschrieben wurde, erkannt wird, gekennzeichnet durch eine Identifikationsperioden-Korrektureinrichtung (45) zum Korrigieren der Identifikationsperiode, so daß die Identifikationsperiode so verlängert oder verkürzt wird, wie die kürzer als die dazwischenliegende Identifikationsperiode ausfallende berührungsfreie Periode zwischen dem Zeitpunkt der Lösung der Schreibeinrichtung vom Tablett und dem Zeitpunkt der nachfolgenden Berührung des Tabletts mit der Schreibeinrichtung verlängert bzw. verkürzt wird.

2. Zeichenlesevorrichtung nach Anspruch 1, bei der die Identifikationsperioden-Korrektureinrichtung (45) so arbeitet, daß sie jedesmal, wenn das Schreibeinrichtung vom Tablett (11) gelöst ist, um wieder mit dem Tablett (11) in Berührung gebracht zu werden, den Mittelwert der kürzer als die Identifikationsperiode ausfallenden berührungsfreien Perioden der Schreibeinrichtung ermittelt, wodurch die Identifikationsperiode aufgrund des ermittelten Mittelwerts korrigiert wird.

**Revendications**

1. Lecteur de caractères comprenant un numériseur (23) muni d'une tablette (11) sur laquelle des caractères sont écrits à la main à l'aide d'un moyen d'écriture pour entrer les caractères, le numériseur (23) émettant en sortie des données de position d'une position de contact du moyen d'écriture avec la tablette (11) lorsque le caractère est écrit sur la tablette (11), un moyen de comptage de période de non contact (35) pour compter une période de non contact pendant laquelle le moyen d'écriture est séparé de la tablette (11) en réponse aux données de position qui lui sont appliquées depuis le numériseur (23), un moyen de comparaison (36) pour comparer la période de non contact obtenue au moyen du moyen de comptage de période de non contact (35) à une période d'identification pour ainsi générer un signal de fin d'entrée de caractère lorsque la période de non contact est plus longue que la période d'identification et un moyen de reconnaissance de caractères (42) pour obtenir des lieux de déplacement sur la base des données de position lorsque celui-ci se voit appliquer les données de position en provenance du numériseur (23) et en outre le signal de fin d'entrée de caractère en provenance du moyen de comparaison (36) pour ainsi reconnaître le caractère écrit sur la tablette (11) à l'aide du moyen d'écriture, caractérisé par un moyen de compensation de période d'identification (45) pour compenser la période d'identification de telle sorte que la période d'identification soit rallongée ou raccourcie lorsque la période de non contact plus courte que la période d'identification prise parmi les périodes qui se situent entre l'instant de la séparation du moyen d'écriture vis-à-vis de la tablette et l'instant du contact suivant du moyen d'écriture avec celle-ci est respectivement rallongée ou raccourcie.

2. Lecteur de caractères selon la revendication 1, dans lequel le moyen de compensation de période d'identification (45) fonctionne pour obtenir la moyenne des périodes de non contact du moyen d'écriture qui sont plus courtes que la période d'identification chaque fois que le moyen d'écriture est séparé de la tablette (11) pour être amené à nouveau en contact avec la tablette (11) pour ainsi compenser la période d'identification sur la base de la moyenne obtenue.

7

FIG.1

FIG. 2

FIG. 3

FIG.4

Start

S1 — Input position data from digitizer

S2 — Is stylus pen contact with tablet detected ? — YES

NO

S3 — Start counting non-contact period tn

S4 — Input data of identification period $T_L(T_{Ln-1})$ from identification data storage

S5 — $tn \geqq T_L$ ? — NO

YES

S10 — Completion of one character input

Return

S6 — Is stylus pen contact with tablet detected ? — NO

YES

S7 — Input data of non-contact period tn from internal memory
Obtain identification period $T_{Ln}$ from following expression:

$$T_{Ln} = m \times \frac{(n-1)T_{Ln-1}/m+tn}{n}$$

S8 — Store data of identification period $T_L$

S9 — Count up number n of elements

FIG. 5

11

FIG.6

FIG.7a

FIG.7b

FIG.7c